# EUROPÄISCHE PATENTSCHRIFT

(11) **EP 0 411 448 B1**
(45) Veröffentlichungstag und Bekanntmachung des Hinweises auf die Patenterteilung: **05.05.1993**
(21) Anmeldenummer: 90114210.9
(22) Anmeldetag: 25.07.1990
(51) Int. Cl.: B60R 21/13

(54) **Kraftfahrzeug mit Überrollbügel**
Motor car with roll bar
Véhicule automobile avec arceau de sécurité

(30) Priorität: 02.08.1989 DE 3925515
(43) Veröffentlichungstag der Anmeldung: 06.02.1991
(73) Patentinhaber: Bayerische Motoren Werke Aktiengesellschaft, 80788 München (DE); ALFRED TEVES GmbH & CO. OHG, 51693 Bergneustadt (DE)
(72) Erfinder: Pfanzeder, Dieter, D-8919 Utting (DE); Dangl, Wolfgang, D-8000 München 60 (DE); Kapitza, Klaus, D-8011 Baldham (DE); Nowack, Reinhard, D-5962 Drolshagen (DE); Reuber, Gerhard, D-5962 Drolshagen (DE); Wegge, Martin, D-8000 München 45 (DE); Schneider, Hagen, D-8044 Lohhof (DE)
(74) Vertreter: Dexheimer, Rolf

(56) Entgegenhaltungen:
- DE-C- 3 732 562

## Beschreibung

Die Erfindung bezieht sich auf ein Kraftfahrzeug, insbesondere ein Cabriolet, mit einem Überrollbügel, der um eine fahrzeugfeste Schwenkachse aus einer abgesenkten Ruhelage in eine nach oben gerichtete Stützlage und zurück schwenkbar ist.

Derartige Überrollbügel sind bekannt (DE-C 34 10 676 bzw. DE-C 37 32 562). Sie haben im wesentlichen U-Form mit einem sich annähernd über die gesamte Fahrzeugbreite erstreckenden U-Steg und an den freien Enden der U-Schenkel sind sie um eine Fahrzeugquerachse schwenkbar mit dem Fahrzeugkörper verbunden. Die Überrollbügel sind mit Antriebsvorrichtungen versehen, die sensorgesteuert den Bügel sehr schnell in seine nach oben gerichtete Stützlage hochschwenken. Nachteilig ist dabei, daß die Bügel sich in Richtung zum Kopf der Fahrzeuginsassen hin bewegen. Ferner ist es schwierig, die Schwenklagerungen und den Antriebsmechanismus in das Fahrzeugkonzept zu integrieren.

Es ist auch schon ein sich über annähernd die gesamte Fahrzeugbreite erstreckender U-förmiger Überrollbügel bekannt (DE-A 15 55 955), bei dem die seitlichen U-Schenkel in Vertikalführungen verschiebbar sind. Der Bügel ist ebenfalls sensorgesteuert aus seiner eingeschobenen Ruhelage in die ausgeschobene Stützlage verlagerbar. Diese Bauart dürfte technische Schwierigkeiten bereiten, da beim Aus- und Einfahren die eine Bügelseite sich gegenüber der anderen Bügelseite verkanten kann, so daß die Funktionssicherheit fraglich ist.

Der Erfindung liegt die Aufgabe zugrunde, ein Kraftfahrzeug mit einem Überrollbügel der vorausgesetzten Bauart zu schaffen, das eine möglichst hohe Sicherheit bietet und raumsparend in gebräuchliche Fahrzeugkonzepte integrierbar ist.

Diese Aufgabe wird erfindungsgemäß dadurch gelöst, daß der Überrollbügel um eine im wesentlichen in Fahrzeuglängsrichtung verlaufende Schwenkachse schwenkbar ist. Zweckmäßig sind dabei zwei um zumindest annähernd parallele Schwenkachsen schwenkbare Überrollbügel vorgesehen. Ein derartiges Überschlagschutzsystem ist relativ einfach im Bereich der Hecktrennwand in ein Fahrzeugkonzept integrierbar. Die Überrollbügel schwenken dabei aus einer taschenähnlichen Vertiefung im wesentlichen in der Bügelebene nach oben. Sie werden dabei eher an den Köpfen der Fahrzeuginsassen hinten vorbeibewegt und nicht auf die Köpfe zu. Sollte einer der beiden Bügel nicht oder nicht mehr funktionsfähig sein, so bietet der andere Bügel immer noch einen guten Überschlagschutz.

Die Erfindung und weitere vorteilhafte Weiterbildungen der Erfindung sind im folgenden anhand eines in der Zeichnung dargestellten Ausführungsbeispiels näher erläutert. Es zeigen
- Fig. 1: eine perspektivische Teilansicht auf den Heckbereich eines als Cabriolet ausgebildeten Kraftfahrzeugs mit nach oben geschwenkten Überrollbügeln;
- Fig. 2: eine der Fig. 1 ähnliche Teilansicht mit eingeschwenkten Überrollbügeln;
- Fig. 3a: eine etwas schematisierte Längsansicht auf eine Wagenhälfte mit eingeschwenktem Überrollbügel;
- Fig. 3b: eine der Fig. 3a entsprechende Ansicht jedoch mit einem in Stützlage befindlichen Überrollbügel;
- Fig. 4: einen etwa in der Ebene des Bügels geführten Schnitt durch einen Überrollbügel;
- Fig. 5: einen Schnitt nach der Linie V-V in Fig. 4;
- Fig. 6: eine die Überrollbügel lagernde Grundplatte mit einem Überrollbügel und
- Fig. 7: einen Schnitt nach der Linie VII-VII in Fig. 6.

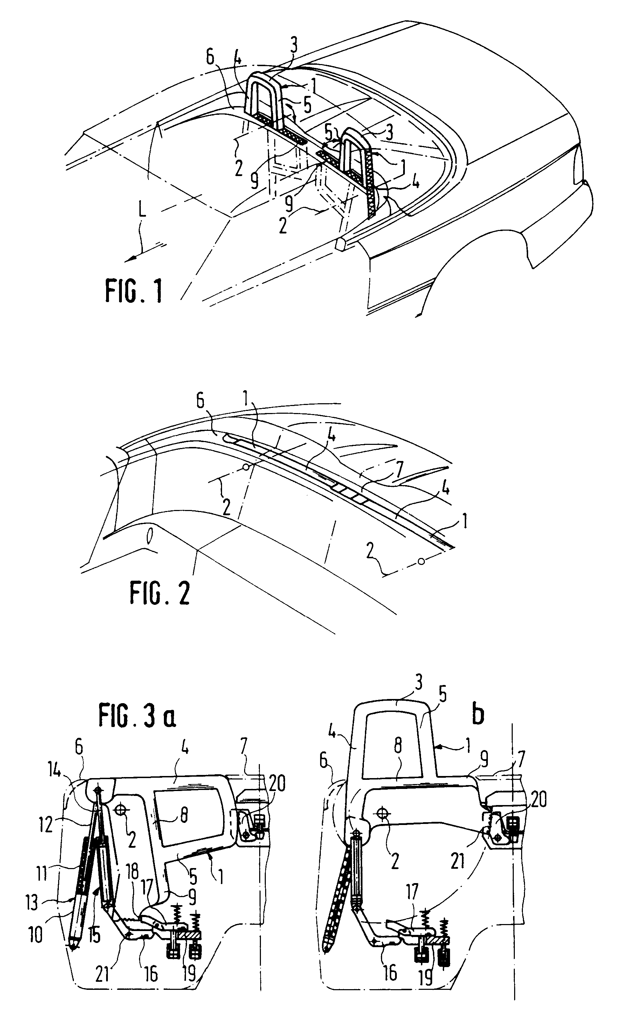

In den Fig. 1 und 2 ist der Heckbereich eines Cabriolets erkennbar. In den Fahrzeugkörper integriert ist ein Überrollschutz-System, das bei dem dargestellten Ausführungsbeispiel zwei Überrollbügel 1 umfaßt, die jeweils um eine im wesentlichen in Fahrzeuglängsrichtung L verlaufende Schwenkachse 2 schwenkbar sind. Die Überrollbügel 1 sind in Fig. 1 in ausgezogenen Linien in der nach oben gerichteten Stützlage gezeichnet und in strichpunktierten Linien in der eingeschwenkten Ruhelage angedeutet. Sie schwenken annähernd in einer ungefähr lotrechten Fahrzeugquerebene. Auf diese Weise benötigen sie wenig Bauraum, sind gut in vorhandene Fahrzeugkonzepte einbeziehbar und vermindern das Verletzungsrisiko der Fahrzeuginsassen beim schnellen Ausschwenken. Das schnelle Ausschwenken erfolgt durch einen geeigneten Antrieb, der bei Vorliegen eines Signals eines Überschlagsensors in Tätigkeit tritt. Die Überrollbügel können aber auch willkürlich, manuell gesteuert aus- und eingeschwenkt werden.

Wie man erkennt, sind die Schwenkachsen 2 in den seitlichen Bereichen der Fahrzeug-Karosserie vorgesehen, also in verhältnismäßig steifen Karosseriebereichen, was eine gute Einleitung der im Falle eines Überschlags über die Bügel in die Karosserie übertragenen Kräfte gewährleistet.

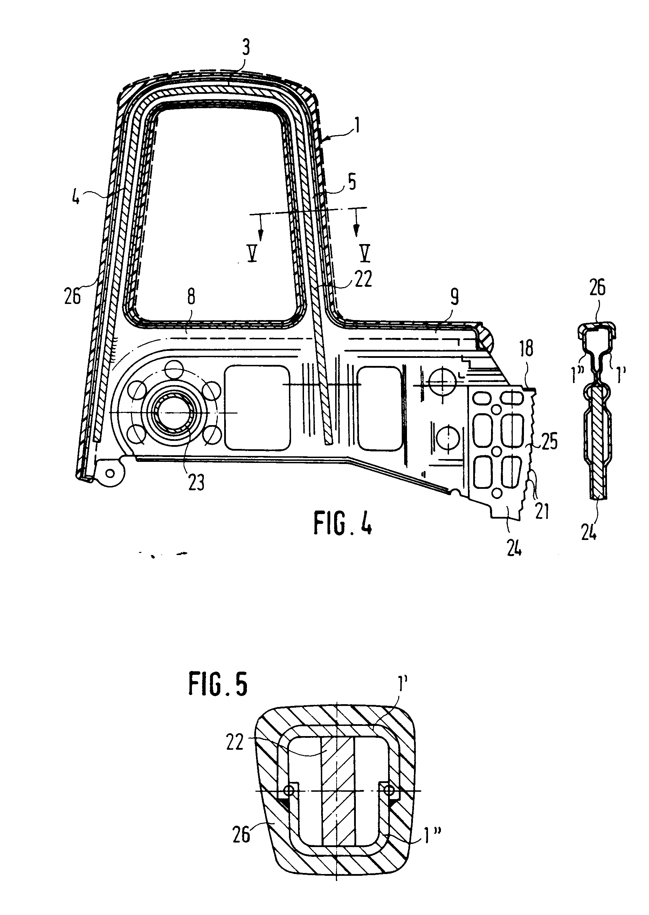

Die Überrollbügel 1 haben eine im wesentlichen U-förmige Grundgestalt. In der aufgerichteten Stützlage verläuft der U-Steg 3 in Fahrzeugquerrichtung, während sich die U-Schenkel 4 und 5 von dem Steg 3 nach unten erstrecken. In der abgesenkten Ruhelage (Fig. 2 und 3a) haben die Überrollbügel 1 eine zu den angrenzenden Fahrzeugflächen 6 und 7 bündige Kontur. Gemäß Fig. 3a verläuft hierzu die Außenseite des U-Schenkels 4 bündig zu den angrenzenden Fahrzeugflächen 6 bzw. 7.

Wie man insbesondere in Fig. 3a und 3b erkennt, ist der im wesentlichen U-förmige Überrollbügel 1 durch einen Quersteg 8 zu einem geschlossenen Rahmen ergänzt. Die Gestaltung jedes Bügels ist dabei in vorteilhafter Weise so getroffen worden, daß in der aufgerichteten Stützstellung (Fig. 3b) die Oberseite des Quersteges 8 ebenfalls bündig zu den angrenzenden Fahrzeugflächen 6 bzw. 7 verläuft. Bei der dargestellten Ausführungsform steht von dem Schenkel 5 jeweils noch seitlich eine mit dem Quersteg 8 fluchtende Verlängerung 9 ab. In der ausgefahrenen Stellung gemäß Fig. 3b deckt also der Überrollbügel 1 mit dem Quersteg 8 und der Verlängerung 9 wiederum die gesamte Ausfahröffnung bündig ab, so daß auch mit ausgefahrenen Überrollbügeln 1 ein optisch guter Eindruck erreichbar ist.

In den Fig. 3a und 3b ist der Antriebsmechanismus zum Verschwenken der Überrollbügel, der Sperrmechanismus zum Halten der Bügel in der eingefahrenen Stellung und der Verriegelungsmechanismus zum Festlegen der Bügel in der ausgefahrenen Stellung angedeutet.

In einem seitlichen Abstand von der Schwenkachse 2 greift die in einem Zylinder 10 geführte und von einer Feder 11 belastete Stange 12 eines Federelementes 13 an, das sich unten fahrzeugaufbaufest abstützt. An der gleichen Stelle des Überrollbügels 1 greift auch die Kolbenstange 14 eines doppelt wirkenden Hydraulikzylinders 15 an, der sich unten gelenkig an einem Ende einer aufbaufest gelagerten zweiarmigen Schwinge 16 abstützt.

Ein federbelasteter doppelarmiger Hebel 17 hält mit einem Ende den Überrollbügel 1 über einen geeigneten Haltevorsprung 18 in seiner eingeschwenkten Lage (Fig. 3a). Wird der Hebel 17 mit seinem rechten Ende gegen Federkraft nach oben geschwenkt, kommt der Überrollbügel 1 frei und kann beispielsweise durch den Hydraulikzylinder 15 willkürlich nach oben gefahren werden. Eine Betätigung des Hebels 19 mit seinem rechten Ende nach oben bewirkt nicht nur eine Freigabe des Überrollbügels 1, sondern auch eine Freigabe der Schwinge 16 und damit der unteren Abstützung des Hydraulikzylinders 15, so daß unter der Wirkung des Federelementes 13 der Überrollbügel 1 sehr schnell nach oben geschwenkt wird. In seiner aufgerichteten Lage (Fig. 3b) wird er durch eine federbelastete Klinke 20 gegen Zurückschwenken verriegelt, die mit einem geeigneten Zahnprofil 21 des Bügels zusammenwirkt.

Aus Fig. 4 und insbesondere aus Fig. 5 wird erkennbar, daß der Überrollbügel im wesentlichen aus zwei Blechschalen 1' und 1'' gebildet ist, die an den Rändern ineinandergesteckt und miteinander verschweißt sind. Die Blechschalen 1' bzw. 1'' schließen im Bereich des Steges 3 sowie der Schenkel 4 und 5 des U-förmigen Überrollbügels 1 ein Verstärkungsband 22 ein, daß sich über den Quersteg 8 hinaus noch weiter nach unten erstreckt. Das Verstärkungsband 22 dient zum einen zur Erhöhung der Steifigkeit des Überrollbügels 1 und zum anderen auch als Distanzelement beim Verschweißen der beiden Blechschalen 1' und 1''.

Gemäß Fig. 4 ist an der der Verlängerung 9 abgekehrten Seite des Überrollbügels 1 die Lagerbuchse 23 der Schwenklagerung des Überrollbügels 1 vorgesehen. An dem anderen Endbereich, das heißt an dem in Stützlage unterhalb der Verlängerung 9 gelegenen Bereich des Überrollbügels 1 ist ein Verriegelungselement 24 vorgesehen. Das Verriegelungselement 24 umfaßt ein um die Schwenklagerung, das heißt die Lagerbuchse 23 gekrümmtes bogenförmiges Zahnsegment 25 mit dem schon erwähnten Zahnprofil 21, mit dem die in den Fig. 3a und 3b erkennbare federbelastete Klinke 20 in Eingriff kommen kann.

Der sichtbare Bereich des Überrollbügels 1 ist mit einer Umschäumung 26 versehen, die eine stilistische und eine aufprallmindernde Funktion hat.

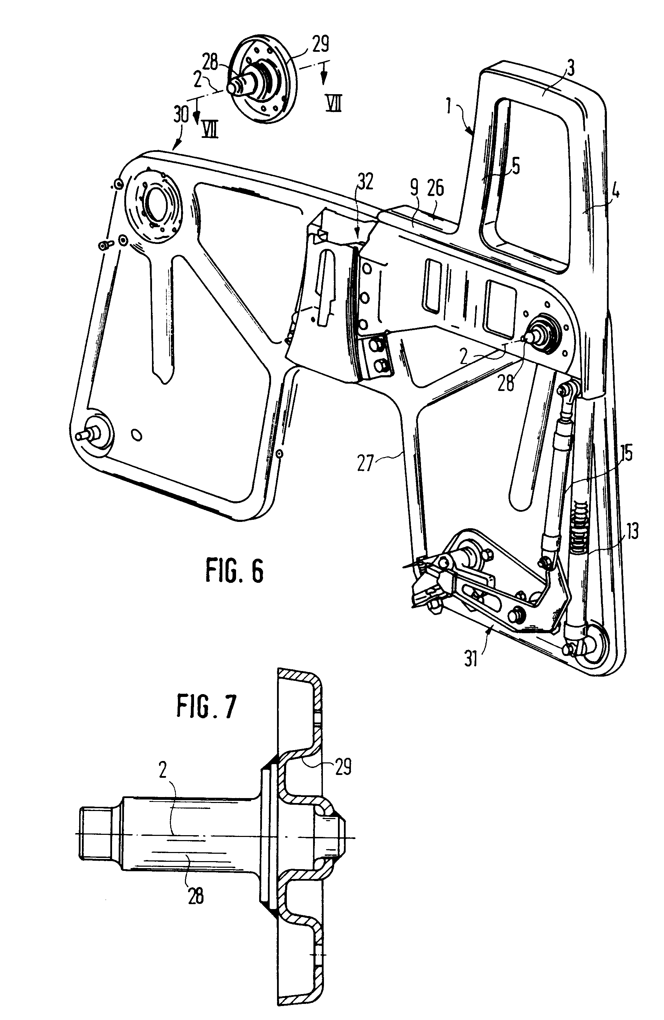

Gemäß Fig. 6 ist jeder Überrollbügel an einer im Fahrzeug befestigbaren Grundplatte 27 gelagert. Dies ermöglicht nicht nur eine besonders flache, raumsparende Bauweise, sondern ermöglicht ferner eine Vormontage des gesamten Überrollsystems. Der Lagerbolzen 28 jedes Überrollbügels 1 ist mit dem mittleren Bereich eines Verstärkungstopfes 29 verschweißt. Der Verstärkungstopf 29 ist in seinem äußeren Bereich in einer entsprechenden Ausnehmung 30 der Grundplatte 27 formschlüssig aufgenommen und mit dieser verschraubt. Der Topf und die angrenzenden Blechbereiche der Grundplatte 27 haben auf diese Weise membranähnliche Eigenschaften, die auf die Lagerung der Überrollbügel ausgeübte Kraftspitzen durch überwiegend elastische Deformation auffangen.

Die Grundplatte 27 trägt die Haltevorrichtungen 31 für die in Ruhelage befindlichen Überrollbügel 1, die Antriebsvorrichtungen, nämlich das Federelement 13 und den Hydraulikzylinder 15 zum Verschwenken der Überrollbügel 1 und die Verriegelungseinrichtungen 32 für die ausgefahrenen Überrollbügel 1.

Die in sich ebenfalls sehr stabil gestaltete Grundplatte 27 ist im Bereich der Schwenkachse 2 bzw. des Verstärkungstopfes 29 mit der Karosserie verschraubt. Weitere Verbindungen mit der Karosserie sind im Bereich der Verriegelungseinrichtung 32, sowie in den unteren Abschnitten der Grundplatte 27 vorgesehen. In den zugeordneten Teilbereichen der Karosserie ist diese ohnehin besonders steif bzw. leicht zu versteifen. Dies ergibt nicht nur eine günstige Krafteinleitung in die Karosseriestruktur im Falle eines Überschlags. Die Bauweise mit der günstig in den Aufbau integrierbaren Grundplatte gewährleistet auch eine hohe Funktionssicherheit, da die Justierung der Stell- und Verriegelungselemente auch bei gewissen Verwindungen oder sonstigen Verformungen des Fahrzeugkörpers erhalten bleiben.

## Patentansprüche

1. Kraftfahrzeug, insbesondere Cabriolet, mit einem Überrollbügel (1), der um eine fahrzeugfeste Schwenkachse (2) aus einer abgesenkten Ruhelage in eine nach oben gerichtete Stützlage und zurück schwenkbar ist, dadurch gekennzeichnet, daß der Überrollbügel (1) um eine im wesentlichen in Fahrzeuglängsrichtung (L) verlaufende Schwenkachse (2) schwenkbar ist.

2. Kraftfahrzeug nach Anspruch 1, dadurch gekennzeichnet, daß zwei um zumindest annähernd parallele Schwenkachsen (2) schwenkbare Überrollbügel (1) vorgesehen sind.

3. Kraftfahrzeug nach Anspruch 2, dadurch gekennzeichnet, daß die Schwenkachse (2) in den Seitenbereichen der Fahrzeug-Karosserie vorgesehen sind.

4. Kraftfahrzeug nach Anspruch 1 mit einem im wesentlichen U-förmigen Überrollbügel, der in Ruhelage eine zu den angrenzenden Fahrzeugflächen bündige Kontur hat, dadurch gekennzeichnet, daß die Außenseite eines U-Schenkels (4) bündig zu den angrenzenden Fahrzeugflächen (6, 7) verläuft.

5. Kraftfahrzeug nach Anspruch 1, dadurch gekennzeichnet, daß die in Ruhelage den Überrollbügel (1) aufnehmende Karosserieöffnung in Stützlage des Überrollbügels (1) von Teilen des Überrollbügels (1) abgedeckt ist.

6. Kraftfahrzeug nach Anspruch 4, dadurch gekennzeichnet, daß der im wesentlichen U-förmige Überrollbügel (1) durch einen Quersteg (8) zu einem geschlossenen Rahmen ergänzt ist, und daß in der aufgerichteten Stützstellung die Oberseite des Quersteges (8) etwa bündig zu den angrenzenden Fahrzeugflächen (6, 7) verläuft.

7. Kraftfahrzeug nach Anspruch 6, dadurch gekennzeichnet, daß von wenigstens einem der Schenkel (5) des U-förmigen Überrollbügels (1) seitlich eine mit dem Quersteg (8) fluchtende Verlängerung (9) absteht.

8. Kraftfahrzeug nach Anspruch 6 und 7, dadurch gekennzeichnet, daß die Karosserieöffnung in der Stützlage im wesentlichen durch den Quersteg (8) und die Verlängerung (9) abgedeckt ist.

9. Kraftfahrzeug nach Anspruch 1, dadurch gekennzeichnet, daß der Überrollbügel (1) aus zwei Blechschalen (1', 1'') gebildet ist, die an den Rändern ineinandergesteckt und miteinander verbunden sind.

10. Kraftfahrzeug nach Anspruch 9, dadurch gekennzeichnet, daß die Blechschalen (1', 1'') im Bereich der Schenkel (4, 5) und des Steges (3) des U-förmigen Überrollbügels (1) ein Verstärkungsband (22) umschließen.

11. Kraftfahrzeug nach Anspruch 10, dadurch gekennzeichnet, daß das Verstärkungsband (22) sich über den Quersteg (8) hinaus erstreckt.

12. Kraftfahrzeug nach Anspruch 6, dadurch gekennzeichnet, daß auf der der Verlängerung (9) abgekehrten Seite des Überrollbügels (1) die Schwenklagerung (Lagerbuchse 23) vorgesehen ist.

13. Kraftfahrzeug nach Anspruch 6, dadurch gekennzeichnet, daß in dem in Stützlage unterhalb der der Verlängerung (9) gelegenen Bereich des Überrollbügels (1) ein Verriegelungselement (24) vorgesehen ist.

14. Kraftfahrzeug nach Anspruch 14, dadurch gekennzeichnet, daß das Verriegelungselement (24) ein um die Schwenklagerung (Lagerbuchse 3) gekrümmtes bogenförmiges Zahnsegment (25) mit einem Zahnprofil (21) aufweist, dem eine am Aufbau gelagerte, federbelastete Klinke (20) zugeordnet ist.

15. Kraftfahrzeug nach Anspruch 2, dadurch gekennzeichnet, daß die Überrollbügel (1) an einer im Fahrzeug befestigbaren Grundplatte (27) gelagert sind.

16. Kraftfahrzeug nach Anspruch 15, dadurch gekennzeichnet, daß der Lagerbolzen (28) jedes Überrollbügels (1) mit dem mittleren Bereich eines Verstärkungstopfes (29) verbunden sind, der im äußeren Bereich in einer entsprechenden Ausnehmung (30) der Grundplatte (27) aufgenommen und mit dieser verschraubt ist.

17. Kraftfahrzeug nach Anspruch 15, dadurch gekennzeichnet, daß an der Grundplatte die Haltevorrichtungen für die in Ruhelage befindlichen Überrollbügel (1), die Antriebsvorrichtungen (Federelement 13, Hydraulikzylinder 15) zum Ausfahren und die Verriegelungseinrichtungen (32) für die ausgefahrenen Überrollbügel (1) angeordnet sind.

## Claims

1. A motor vehicle, more especially a convertible, comprising a roll bar (1) pivotable between a retracted inoperative position and an upwardly directed upright position around a stationary axis (2) relative to the vehicle, characterised in that the roll bar (1) is pivotable around an axis (2) extending substantially in the longitudinal direction (L) of the vehicle.

2. A motor vehicle according to claim 1, characterised in that two roll bars (1) are provided and are pivotable around approximately parallel axes (2).

3. A motor vehicle according to claim 2, characterised in that the axis (2) is situated in the side regions of the vehicle body.

4. A motor vehicle according to claim 1 comprising a substantially U-shaped roll bar which, in the inoperative position, has a contour flush with the adjacent surfaces of the vehicle, characterised in that the outside of an arm (4) of the U extends flush with the adjacent surfaces (6, 7) of the vehicle.

5. A motor vehicle according to claim 1, characterised in that the opening in the body which receives the roll bar (1) in the inoperative position is covered by parts of the roll bar (1) when in the upright position.

6. A motor vehicle according to claim 4, characterised in that the substantially U-shaped roll bar (1) is supplemented by a transverse web (8) to form an enclosed frame, and in the upright position the top surface of the transverse web (8) extends appoximately flush with the adjacent surfaces (6, 7) of the vehicle.

7. A motor vehicle according to claim 6, characterised in that a prolongation (9) flush with the transverse web (8) extends from at least one arm (5) of the U-shaped roll bar (1).

8. A motor vehicle according to claim 6 and 7, characterised in that the opening in the body is substantially covered by the transverse web (8) and the prolongation (9) when in the upright position.

9. A motor vehicle according to claim 1, characterised in that the roll bar (1) is made up of two sheet-metal shells (1', 1'' ) which are fitted into one another and joined at the edges.

10. A motor vehicle according to claim 9, characterised in that the sheet-metal shells (1', 1'' ) surround a reinforcing tie (22) in the region of the arms (4,5) and the web (3) of the U-shaped roll bar (1).

11. A motor vehicle according to claim 10, characterised in that the tie (22) extends beyond the transverse web (8).

12. A motor vehicle according to claim 6, characterised in that the pivot bearing (bush 23) is provided on the side of the roll bar (1) remote from the prolongation (9).

13. A motor vehicle according to claim 6, characterised in that a locking element (24) is provided in the region of the roll bar (1) which is below the prolongation (9) when in the upright position.

14. A motor vehicle according to claim 14, characterised in that the locking element (24) comprises an arcuate toothed segment (25) which bends round the pivot bearing (bush 3) and has a toothed profile (21) associated with a spring-loaded pawl (20) mounted on the vehicle body.

15. A motor vehicle according to claim 2, characterised in that the roll bar (1) is mounted on a bearing plate (27) for securing in the vehicle.

16. A motor vehicle according to claim 15, characterised in that the pivot pin (28) of each roll bar (1) is connected to the central region of a reinforcing dish (29), the outer region of which is received in and screwed to a corresponding recess (30) in the bearing plate (27).

17. A motor vehicle according to claim 15, characterised in that the bearing plate contains the means for holding the roll bar (1) in the inoperative position, the driving means (spring element 13 and hydraulic cylinder 15) for extending the roll bar, and the devices (32) for locking the roll bar (1) when extended.

## Revendications

1. Véhicule à moteur, en particulier cabriolet, avec un arceau de sécurité (1) qui peut pivoter à partir d'une position de repos abaissée en une position d'appui dirigée vers le haut et inversement, véhicule à moteur caractérisé en ce que l'arceau de sécurité (1) peut pivoter autour d'un axe de pivotement (2) s'étendant essentiellement dans le sens longitudinal (4) du véhicule.

2. Véhicule à moteur selon la revendication 1, caractérisé en ce que l'on prévoit deux arceaux de sécurité (1) pouvant pivoter autour d'axes de pivotement (2) au moins approximativement parallèles.

3. Véhicule à moteur selon la revendication 2, caractérisé en ce que les axes de pivotement (2) sont prévus dans les zones latérales de la carrosserie du véhicule.

4. Véhicule à moteur selon la revendication 1 avec un arceau de sécurité sensiblement en forme d'U, arceau qui en position de repos a un contour venant à fleur des surfaces adjacentes du véhicule, véhicule caractérisé en ce que le côté extérieur d'une jambe (4) de l'U vient à fleur des surfaces adjacentes (6, 7) du véhicule.

5. Véhicule selon la revendication 1, caractérisé en ce que l'ouverture de la carrosserie recevant en position de repos l'arceau de guidage (1) est recouvert quand l'arceau de sécurité (1) est en position d'appui par des partie de l'arceau de sécurité.

6. Véhicule selon la revendication 4, caractérisé en ce que l'arceau de sécurité (1) sensiblement en forme d'U est complété par une barre transversale (8) pour former un cadre fermé et en ce que dans la position érigée d'appui le côté supérieur de la barre transversale (8) s'étend à peu près à fleur des surfaces adjacentes du véhicule (6, 7).

7. Véhicule selon la revendication 6, caractérisé en ce qu'un prolongement, faisant suite à la barre transversale (8), s'écarte latéralement, d'au moins l'une des jambes (5) de l'arceau de sécurité (1) en forme d'U.

8. Véhicule selon la revendication 6 et la revendication 7, caractérisé en ce que l'ouverture de la carrosserie est, en position de repos, recouverte sensiblement par la barre transversale (8) et le prolongement (9).

9. Véhicule selon la revendication 1, caractérisé en ce que l'arceau de sécurité (1) est formé de deux coquilles de tôle (1', 1''), qui s'enfoncent l'une dans l'autre sur les bords et sont soudée ensemble.

10. Véhicule selon la revendication 9, caractérisé en ce que les coquilles de tôle (1', 1'') enferment dans la zone des branches (4, 5) et de la barre (3) de l'arceau de sécurité (1) en forme d'U une bande de renforcement (22).

11. Véhicule selon la revendication 10, caractérisé en ce que la bande de renforcement (22) s'étend au-delà de la barre transversale (8).

12. Véhicule selon la revendication 6, caractérisé en ce qu'il est prévu sur le côté de l'arceau de sécurité (1) tourné à l'opposé du prolongement (9) le palier de pivotement (coussinet de palier 23).

13. Véhicule selon la revendication 6, caractérisé en ce que dans la zone située, en position d'appui, en-dessous du prolongement (9) il est prévu un élément de verrouillage (24).

14. Véhicule selon la revendication 14, caractérisé en ce que l'élément de verrouillage (24) présente un segment denté (25), recourbé en forme d'arc autour du palier de pivotement (coussinet de palier 23), avec un profil denté (21), auquel est associé un loquet (20) monté sur le châssis, comprimé par un ressort.

15. Véhicule selon la revendication 2, caractérisé en ce que les arceaux de sécurité (1) sont montés sur une plaque de base (27) pouvant être fixée sur le véhicule.

16. Véhicule selon la revendication 15, caractérisé en ce que les axes de palier (28) de chaque arceau de sécurité (1) sont reliés à la zone médiane d'une cuvette de renforcement (29), qui est reçu dans la zone extérieure dans un évidement correspondant (30) de la plaque de base (27) et est vissé sur celle-ci.

17. Véhicule selon la revendication 15, caractérisé en ce que sur la plaque de base sont disposés les dispositifs d'arrêt pour les arceaux de sécurité (1) quand ils se trouvent en position de repos, les dispositifs d'entraînement (l'élément de ressort 13, le vérin hydraulique 15) pour la sortie et les éléments de verrouillage (32) pour les arceaux de sécurité (1) sortis.
